# EUROPÄISCHE PATENTSCHRIFT

(11) **EP 2 570 216 B1**
(45) Veröffentlichungstag und Bekanntmachung des Hinweises auf die Patenterteilung: **18.02.2015**
(21) Anmeldenummer: 12182725.7
(22) Anmeldetag: 03.09.2012
(51) Int. Cl.: B23D 61/02, B23D 61/12

(54) **Sägeblatt mit Leistungszähnen und Oberflächenzähnen**
Saw blade including performance teeth and surface teeth
Lame de scie avec dents de surface et dents de puissance

(30) Priorität: 16.09.2011 DE 102011053720
(43) Veröffentlichungstag der Anmeldung: 20.03.2013
(73) Patentinhaber: WIKUS-Sägenfabrik Wilhelm H. Kullmann GmbH & Co. KG, 34286 Spangenberg (DE)
(72) Erfinder: Kullmann, Dr. Jörg H., 34286 Spangenberg (DE); Gleim, Dr. Patrick, 34576 Homberg/Efze (DE); Heimel, Dirk, 34587 Felsberg (DE)
(74) Vertreter: REHBERG HÜPPE + PARTNER

(56) Entgegenhaltungen:
- EP-A1- 0 551 104
- EP-A2- 2 060 356
- EP-A2- 2 277 652
- WO-A1-02/49793
- WO-A1-98/07545
- GB-A- 2 113 144
- US-A- 853 255
- US-A1- 2003 089 215

## Beschreibung

### TECHNISCHES GEBIET DER ERFINDUNG

Die Erfindung betrifft ein Sägeblatt mit einem Grundkörper und einer Mehrzahl von an den Grundkörper anschließenden Zähnen. Ein Teil der Zähne ist als sich entlang des Grundkörpers wiederholende Oberflächenzähne ausgebildet. Ein anderer Teil der Zähne ist als sich entlang des Grundkörpers wiederholende Gruppe mit ungeschränkten Leistungszähnen ausgebildet.

Derartige Sägeblätter können insbesondere als langgestrecktes Sägeband mit einer linearen Anordnung der Zähne hintereinander, als Bügelsägeblatt oder auch als Kreissägeblatt ausgebildet sein. Der Grundkörper besteht bevorzugt aus Metall und die Zähne können mindestens teilweise aus Schnellarbeitsstahl, Hartmetall, Hartmetalleinsätzen usw. bestehen, wodurch sich das Sägeblatt besonders gut zum Sägen von Metallwerkstoffen eignet.

### STAND DER TECHNIK

Ein Sägeblatt mit einem Grundkörper und einer Mehrzahl von an den Grundkörper anschließenden Zähnen ist aus der deutschen Patentanmeldung DE 42 00 423 A1 und der europäischen Patentanmeldung EP 0 551 104 A1 bekannt. Dieses Sägeblatt ist auch unter der Marke "FUTURA" der Anmelderin bekannt. Die Zähne sind als ungeschränkte konische gefaste Zähne ausgebildet, die sich in einer Höhen- und Breitenstufung in einer Gruppe befinden, die sich entlang des Grundkörpers wiederholt. Die Gruppe weist dabei den breitesten und niedrigsten Zahn als Oberflächenzahn und die anderen Zähne als Leistungszähne auf.

Ein Sägeblatt mit einem Grundkörper und einer Mehrzahl von an den Grundkörper anschließenden Zähnen ist aus dem US-Patent US 6,220,140 B1 bekannt. Das Sägeblatt dient zum Sägen von Metall und weist eine Mehrzahl sich entlang des Grundkörpers wiederholende Oberflächenzähne auf, die jeweils im Paar aus einem nach links geschränkten Zahn und einem nach rechts geschränkten Zähne angeordnet sind. Weiterhin kann ein Teil der Zähne als sich entlang des Grundkörpers wiederholende Gruppe mit jeweils drei Leistungszähnen ausgebildet sein, die sich entlang des Grundkörpers wiederholen. Die Leistungszähne sind jeweils zwischen zwei benachbarten Paaren von geschränkten Oberflächenzähnen angeordnet. Die Leistungszähne weisen unterschiedliche Höhen auf. Der Abstand zwischen benachbarten geschränkten Oberflächenzähnen innerhalb eines Paars geschränkter Oberflächenzähne ist immer kleiner als die Abstände zwischen den Oberflächenzähnen und den Leistungszähnen. Die zuletzt genannten Abstände können auch variiert werden.

Ein weiteres Sägeblatt mit einem Grundkörper und einer Mehrzahl von an den Grundkörper anschließenden Zähnen ist aus der PCT-Anmeldung WO 99/32251 bekannt. Ein Teil der Zähne ist als sich entlang des Grundkörpers wiederholende geschränkte Oberflächenzähne ausgebildet. Ein anderer Teil der Zähne ist als sich entlang des Grundkörpers wiederholende Gruppe mit mindestens zwei ungeschränkten Leistungszähnen ausgebildet, die jeweils zwischen zwei benachbarten Paaren geschränkter Oberflächenzähne angeordnet sind. Ein vergleichbares Sägeblatt ist auch aus dem deutschen Patent DE 103 93 472 T5 bekannt.

Ein weiteres Sägeblatt mit einem Grundkörper und einer Mehrzahl von an den Grundkörper anschließenden Zähnen ist aus der deutschen Patentanmeldung DE 43 00 622 A1 bekannt. Dieses Sägeblatt ist auch unter der Marke "FUTURA PLUS" der Anmelderin bekannt. Die Zähne sind als ungeschränkte konische gefaste Zähne ausgebildet, die sich in zwei Gruppen befinden, die sich entlang des Grundkörpers ineinandergeschachtelt wiederholen. In der ersten Gruppe sind die Zähne in einer Höhen- und Breitenstufung angeordnet und bilden die Leistungszähne. Die Zähne der zweiten Gruppe sind untereinander identisch ausgebildet und stellen die Zähne mit der größten Breite und somit die Oberflächenzähne dar.

Ein Sägeblatt mit einem Grundkörper und einer Mehrzahl von an den Grundkörper anschließenden Zähnen ist ferner aus der deutschen Patentanmeldung DE 197 39 074 A1 bekannt. Dieses Sägeblatt ist auch unter der Marke "SELEKTA" der Anmelderin bekannt. Die Zähne sind in einer sich entlang des Grundkörpers wiederholenden Gruppe angeordnet. Die Gruppe weist eine gerade Anzahl geschränkter Zähne auf, die direkt aufeinander folgen und die Oberflächenzähne bilden. Die Gruppe weist weiterhin einen ungeschränkten Zahn mit der größten Höhe der Zähne auf, der den Leistungszahn bildet. Die verringerte Höhe der Oberflächenzähne wurde durch eine elastisch-plastische Verformung, insbesondere durch Stauchen, erzeugt.

### AUFGABE DER ERFINDUNG

Der Erfindung liegt die Aufgabe zugrunde, ein Sägeblatt bereitzustellen, welches bei hoher Schnittleistung ein reduziertes Schwingungsverhalten besitzt und eine verbesserte Oberflächengüte im Schnittkanal erzeugt.

### LÖSUNG

Die Aufgabe der Erfindung wird erfindungsgemäß mit den Merkmalen des unabhängigen Patentanspruchs 1 gelöst.

Weitere bevorzugte erfindungsgemäße Ausgestaltungen sind den abhängigen Patentansprüchen zu entnehmen.

### BESCHREIBUNG DER ERFINDUNG

Das Sägeblatt weist einen Grundkörper und eine Mehrzahl von an den Grundkörper anschließenden Zähnen auf. Ein Teil der Zähne ist als sich entlang des Grundkörpers wiederholende Oberflächenzähne ausgebildet. Ein anderer Teil der Zähne ist als sich entlang des Grundkörpers wiederholende Gruppe mit drei ungeschränkten Leistungszähnen ausgebildet. Eine erste Anzahl der Leistungszähne der Gruppe ist an einer ersten Stelle des Grundkörpers zwischen den Oberflächenzähnen und eine zweite Anzahl der Leistungszähne der Gruppe an einer zweiten Stelle des Grundkörpers zwischen den Oberflächenzähnen angeordnet. Die erste Anzahl und die zweite Anzahl unterscheiden sich und sind ungleich null.

### Definitionen

**Oberflächenzahn:** Unter einem Oberflächenzahn wird in dieser Anmeldung ein Zahn des Sägeblatts verstanden, der für die Ausbildung der Oberflächengüte des gesägten Werkstücks verantwortlich ist.

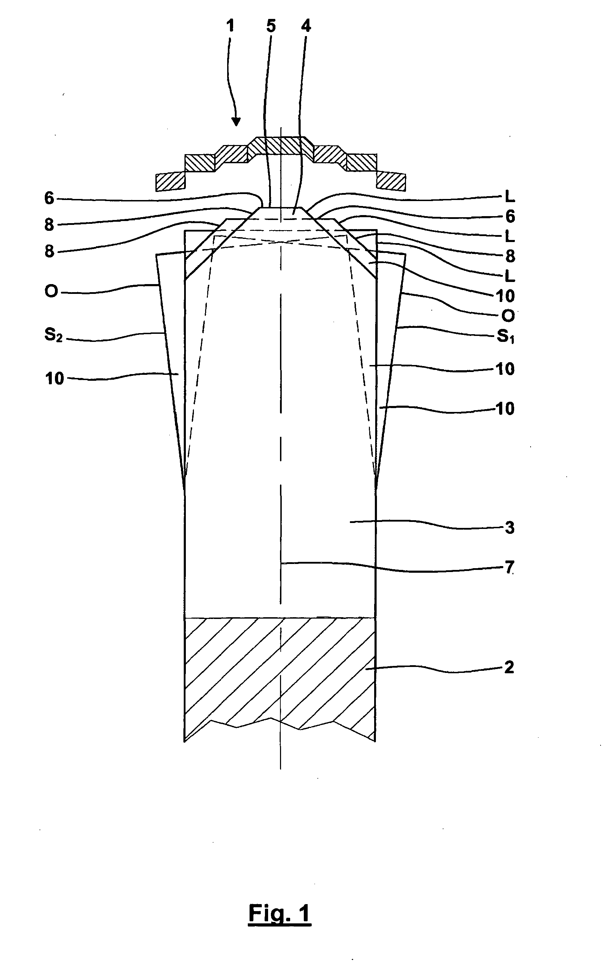

Ein Oberflächenzahn ist also ein Zahn, der in einer Projektion des Sägeblatts in Bandlaufrichtung (siehe beispielsweise Darstellung der Fig. 1) eine äußere seitliche Begrenzung definiert. Wenn es sich bei dem Oberflächenzahn um einen ungeschränkten Zahn handelt, bedeutet dies, dass der Oberflächenzahn der breiteste Zahn ist. Wenn es sich bei dem Oberflächenzahn um einen geschränkten Zahn handelt, bedeutet dies, dass die Schränkungsweite so gewählt wurde, dass der geschränkte Zahn in der zuvor beschriebenen Projektion in der zuvor beschriebenen Weise seitlich über die anderen Zähne hervorsteht.

**Leistungszahn:** Unter einem Leistungszahn ist in dieser Anmeldung ein Zahn zu verstehen, der im Gegensatz zu den Oberflächenzähnen im Wesentlichen für die Schnittleistung des Sägeblatts verantwortlich ist. Ein solcher Zahn ragt also zumindest zu bestimmten Teilen in der Vorschubrichtung des Sägeblatts gegenüber anderen Zähnen hervor. In der zuvor beschriebenen Projektion in Bandlaufrichtung (vgl. Fig. 1) handelt es sich bei einem solchen Leistungszahn also um einen Zahn, der Späne in einem inneren Bereich des Schnittkanals abgewandt von dessen Oberfläche abnimmt.

**Nummerierende Bezugnahme:** Die Bezugnahme auf die Zähne oder andere Merkmale im Sinne von "erste Anzahl", "zweite Anzahl", "erste Richtung", "zweite Richtung" usw. dient zunächst lediglich zur Unterscheidung der Zähne bzw. anderen Merkmalen voneinander und besagt nicht zwangsläufig, in welcher Reihenfolge sie an dem Sägeblatt angeordnet sind. Eine dadurch offenbarte Möglichkeit ist es allerdings, dass die Zähne genau in dieser Reihenfolge - gegebenenfalls unter Zwischenanordnung weiterer Zähne - angeordnet sind.

### Weitere Beschreibung

Das neue Sägblatt weist unterschiedliche Arten von Zähnen auf - nämlich mindestens die Oberflächenzähne und die Leistungszähne -, denen unterschiedliche Funktionen zugeordnet sind. Dies bedeutet jedoch nicht, dass nicht noch weitere Zähne mit anderen Funktionen und auch beispielsweise solche Zähne vorhanden sein können, die unterschiedliche Funktionen miteinander kombinieren.

Jedenfalls weist das Sägeblatt Oberflächenzähne auf, die zur Bearbeitung bzw. Herstellung der gesägten Oberfläche des Werkstückes und zur Schnittkanalaufweitung dienen. Diese Oberflächenzähne bilden also funktionsmäßig den Oberflächenteil des Sägeblatts.

Die Leistungszähne wiederum dienen zur Ausräumung von Spänen im Schnittkanal beabstandet zu dessen Oberfläche in Richtung des Vorschubs des Sägeblatts und bilden somit den Leistungsteil des Sägeblatts.

Erfindungsgemäß sind der Oberflächenteil und der Leistungsteil des neuen Sägeblatts in besonders geschickter Weise aufeinander abgestimmt, so dass trotz sehr hoher Schnittleistung geringe Schwingungen des Sägeblatts auftreten und eine hohe Oberflächengüte des gesägten Werkstückes erzeugt wird. Dies wird dadurch erreicht, dass die Leistungszähne in unterschiedlichen Anzahlen zwischen den Oberflächenzähnen angeordnet sind. Dabei ist die Anzahl ungleich null, so dass als Beispiele für die unterschiedlichen Anzahlen 1, 2; 2, 3; 1, 3 und 3, 4 genannt werden können. Durch die unterschiedliche Anzahl der Leistungszähne zwischen den Gruppen der Oberflächenzähne wird die Variabilität der Zahnteilung des Sägeblatts erhöht, wodurch beim Sägen geringere Schwingungen entstehen, was wiederum einen positiven Einfluss auf die Oberflächengüte des gesägten Werkstücks hat.

Wenn es sich bei den Leistungszähnen um nicht-konische Zähne handelt, ist es bevorzugt, nicht zu viele derartige nicht-konische Zähne hintereinander anzuordnen, da diese Zähne tendenziell zu einem Verklemmen des Werkzeugs (d. h. des Sägeblatts) im Schnittkanal führen.

Das neue Sägeblatt weist neben der hohen Schnittleistung und Oberflächengüte auch ein sehr gutes Anschnittverhalten auf. Dies liegt daran, dass die Leistungszähne als ungeschränkte Zähne ausgebildet sind und daher die zu Beginn des Sägevorgangs entstehenden ersten Späne ohne seitlich einwirkende Kräfte abgenommen werden.

Die Oberflächenzähne können als geschränkte Zähne ausgebildet sein. Vorzugsweise sind die Oberflächenzähne dabei als sich entlang des Grundkörpers wiederholende Gruppe mit jeweils einem in eine erste Richtung geschränkten Zahn und einem in eine andere zweite Richtung geschränkten Zahn ausgebildet. Anders gesagt sind die Oberflächenzähne dann also als Paare mit einem nach links geschränkten Zahn und einem nach rechts geschränkten Zahn ausgebildet. Es könnten jedoch auch andere Zähne zwischengeschaltet und/oder mehrere Paare hintereinander angeordnet sein. Der Vorteil bei geschränkten Zähnen ist es, dass diese die gleiche Breite wie die ungeschränkten Leistungszähne besitzen können und der zur Erzeugung der Oberfläche im Schnittkanal erforderliche Überstand in der Projektion nachträglich durch Schränken erzeugt wird.

Ein erster Teil der Oberflächenzähne kann als sich entlang des Grundkörpers wiederholende erste Gruppe mit jeweils einem in eine erste Richtung geschränkten Zahn und einem in eine andere zweite Richtung geschränkten Zahn ausgebildet sein, wobei zwischen den geschränkten Zähnen ein erster Abstand vorhanden ist. Ein zweiter Teil der Oberflächenzähne kann dann als sich entlang des Grundkörpers wiederholende zweite Gruppe mit jeweils einem in die erste Richtung geschränkten Zahn und einem in die zweite Richtung geschränkten Zahn ausgebildet sein, wobei zwischen diesen geschränkten Zähnen ein zweiter Abstand vorhanden ist und sich der erste Abstand und der zweite Abstand unterscheiden. Anders gesagt variieren dann also die Abstände zwischen den geschränkten Oberflächenzähnen innerhalb der jeweiligen Gruppe. Hierdurch wird die Variabilität der Zahnteilung des Sägeblatts weiter erhöht und unerwünschte Schwingungen noch mehr reduziert. Dieses Merkmal stellt eine ganz bewusste und überraschende Abkehr von den im Stand der Technik bekannten stets gleichbleibenden Abständen zwischen zwei benachbarten geschränkten Oberflächenzähnen dar.

Eine weitere mögliche Ausführungsform der Oberflächenzähne besteht darin, diese als ungeschränkte Zähne auszubilden. Dabei sind die Oberflächenzähne vorzugsweise als konische Zähne und als die Zähne mit der größten Breite der Zähne ausgebildet. Unter einem konischen Zahn wird ein Zahn verstanden, der in der Projektion in der Bandlaufrichtung, wie diese beispielsweise in Fig. 1 dargestellt ist, eine Keilform besitzt, so dass seine Flanken unter einem Freiwinkel zur Vertikalen angeordnet sind und daher einem Verklemmen der Oberflächenzähne und somit des Sägeblatts im Schnittkanal entgegengewirkt wird. Die zuvor beschriebenen Ausführungsformen der geschränkten Oberflächenzähne einerseits und der ungeschränkten konischen Oberflächenzähne andererseits können auch miteinander kombiniert werden.

Vorzugsweise sind die Oberflächenzähne als die Zähne mit der geringsten Höhe ausgebildet. Wie zuvor ausgeführt wurde, dienen die Oberflächenzähne der Gewährleistung der gewünschten glatten Oberfläche bzw. hohen Oberflächengüte des Werkstückes sowie der Aufweitung des Schnittkanals und leisten bevorzugt keinen wesentlichen Beitrag zur Schnittleistung des Sägeblatts in Vorschubrichtung. In diesem Sinne sind dann die Oberflächenzähne als die Zähne mit der geringsten Höhe und die Leistungszähne als die Zähne mit der größten Höhe bzw. den größeren Höhen ausgebildet.

Die Leistungszähne können unterschiedliche Höhen und gleiche Breiten aufweisen, wobei der Leistungszahn mit der größten Höhe einen Schnittkantenabschnitt mit der geringsten Breite und der Leistungszahn mit der geringsten Höhe einen Schnittkantenabschnitt mit der größten Breite der Leistungszähne besitzt. In dieser Weise ist die Schneidarbeit auf unterschiedliche Leistungszähne verteilt und diese sind unterschiedlichen Bereichen im Schnittkanal zugeordnet. In dieser Weise ist der Zahn mit der größten Höhe dem zentralen Bereich des Schnittkanals und der zweithöchste, dritthöchste usw. Zahn den nach außen anschließenden Bereichen zugeordnet. Unter dem zuvor genannten Schnittkantenabschnitt handelt es sich um den beispielsweise in der Darstellung der Fig. 1 erkennbaren horizontalen Abschnitt der Schnittkante der Zahns, der die maximale Höhe des jeweiligen Leistungszahns definiert. An diesen mittig angeordneten Schnittkantenabschnitt schließen sich dann symmetrisch zu beiden Seiten Fasen an. Der Zahn mit der größten Höhe weist demnach die längsten Fasen und der Zahn mit der geringsten Höhe die kürzesten Fasen oder auch keine Fasen auf.

Ein Teil der Leistungszähne oder auch alle Leistungszähne können asymmetrische Fasen aufweisen. Dies bedeutet, dass an dem jeweiligen Leistungszahn die linke Fase eine andere Länge und/oder einen anderen Fasenwinkel als die rechte Fase besitzt. Eine solche Ausbildung macht insbesondere Sinn, wenn mindestens zwei unterschiedliche Arten von Leistungszähnen L₁ und L₂ mit unsymmetrischen Fasen vorhanden sind. Der Leistungszahn L₁ kann dann z. B. eine größere linke Fase und eine kleinere rechte Fase aufweisen (oder umgekehrt), während der Leistungszahn L₂ eine kleinere linke Fase und eine größere rechte Fase aufweist (oder umgekehrt). Vorzugsweise besitzen dabei die kleineren Fasen der beiden Leistungszähne L₁, L₂ eine identische Länge. Vorzugsweise haben auch die größeren Fasen der beiden Leistungszähne L₁, L₂ eine identische Länge. Bevorzugt sind die Leistungszähne L₁, L₂ dabei direkt hintereinander angeordnet. Wenn an einer anderen Stelle des Sägeblatts eine ungerade Anzahl von Leistungszähnen angeordnet ist, besitzt dieser eine Leistungszahn L₃ bzw. besitzen die Leistungszähne L₃, L₄, L₅ usw. vorzugsweise keine asymmetrischen Fasen, d. h. entweder symmetrische Fasen oder überhaupt keine Fasen. In dieser Weise gleichen sich die asymmetrischen Belastungen aus und der Geradeauslauf des Sägeblatts beim Sägen wird gewährleistet.

Der Leistungszahn mit der größten Höhe ist also vorzugsweise gefast. Der Leistungszahn mit der geringsten Höhe kann insbesondere ungefast ausgebildet sein. An diesem Zahn mit der geringsten Höhe treten geringere Kräfte auf und wird eine Fase nicht unbedingt benötigt, so dass der für die Anbringung der Fase an diesem Zahn zu leistende Arbeitsschritt - insbesondere ein Schleifvorgang - entfallen kann.

Die erste Anzahl der Leistungszähne zwischen den Oberflächenzähnen ist vorzugsweise genau eins und die zweite Anzahl der Leistungszähne zwischen den Oberflächenzähnen ist vorzugsweise genau zwei. Diese vergleichsweise geringe Anzahl stellt sicher, dass die Abstände zwischen den Oberflächenzähnen nicht zu groß werden, oder anders gesagt genügend Leistungszähne zur Erbringung der Schnittleistung vorhanden sind und die Oberflächengüte des gesägten Werkstücks nicht beeinträchtigt wird.

Die Zähne können unterschiedliche Höhen besitzen, wobei die geringere Höhe der niedrigeren Zähne durch Umformen, insbesondere Stauchen, erzeugt sein kann. Hierdurch ergeben sich Vorteile bei der Fertigung des Sägeblatts. Es ist jedoch ebenfalls möglich, die Höhenunterschiede durch spanabhebende Verfahren - insbesondere Fräsen oder Schleifen - zu erzeugen.

Die Oberflächenzähne (O) und die Leistungszähne (L) können insbesondere in einer der sich wiederholenden folgenden Abfolgen angeordnet sein:
L-O-L-L-O,
L-O-L-L-O-O,
L-O-O-L-L-O,
L-O-O-L-L-O-O,
L-L-O-L-L-L-O,
L-L-O-L-L-L-O-O ,
L-L-O-O-L-L-L-O.

Dabei ist der einzeln angeordnete Oberflächenzahn (O) bevorzugt als der breiteste Zahn und insbesondere als ein konischer Zahn (K) ausgebildet, während die in einer geraden Anzahl nebeneinander angeordneten Oberflächenzähne (O) bevorzugt als geschränkte Zähne (S) ausgebildet sind. Sie können aber auch als ungeschränkte Oberflächenzähne (O, U) mit der größten Breite und insbesondere als konische Zähne (K) ausgebildet sein, wobei sie dann insbesondere asymmetrisch ausgebildet sind, um den Geradeauslauf des Sägeblatts zu gewährleisten. Es könnte aber auch eine ungerade Mehrzahl oder eine größere gerade Mehrzahl von Oberflächenzähnen (O) nebeneinander angeordnet sein.

Wenn es sich bei den Oberflächenzähnen um geschränkte Zähne (S₁, S₂) handelt, können die Oberflächenzähne (S₁, S₂) und die Leistungszähne (L) insbesondere in einer der sich wiederholenden folgenden Abfolgen angeordnet sein:
L-S₁-S₂-L-L-S₁-S₂,
L-S₁-S₂-L-L-S₁-S₂-S₁-S₂,
L-S₁-S₂-S₁-S₂-L-L-S₁-S₂-S₁-5₂,
L-S₁-S₂-S₁-S₂-L-L-S₁-S₂,
L-L-S₁-S₂-L-L-L-S₁-S₂,
L-L-S₁-S₂-L-L-L-S₁-S₂-S₁-S₂,
L-L-S₁-S₂-S₁-S₂-L-L-L-S₁-S₂.

Das Sägeblatt kann insbesondere als langgestrecktes Sägeband mit einer linearen Anordnung der Zähne hintereinander, als Bügelsägeblatt oder auch als Kreissägeblatt ausgebildet sein. Das Sägeblatt ist vorzugsweise als Sägeband zum Sägen von Metall ausgebildet, bei dem die Zähne bzw. die Zahnspitzen eine größere Härte als der Grundkörper besitzen. Dies kann insbesondere durch Hartmetalleinsätze oder dadurch erreicht werden, dass es sich um ein Bimetallsägeband handelt. Durch seine besondere Geometrie eignet sich das neue Sägeblatt besonders gut zum Sägen von Metallwerkstoffen. Dies bedeutet jedoch nicht, dass das Sägen anderer Werkstücke nicht ebenfalls möglich ist.

Bei sämtlichen zuvor und unterhalb beschriebenen Ausführungsformen des Sägeblatts können die Abfolge, Teilungen, Höhen, Breiten, Fasenanzahlen, Fasenwinkel, Fasenlängen, horizontalen Schnittkantenabschnitte usw. der Zähne variiert werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Gruppe die Rede ist, ist dies so zu verstehen, dass genau eine Gruppe, zwei Gruppen oder mehr Gruppen vorhanden sind. Wenn beispielsweise von drei ungeschränkten Zähnen in der Gruppe die Rede ist, ist dies so zu verstehen, dass genau drei Zähne, vier Zähne oder mehr Zähne in der Gruppe vorhanden sind. Wenn hingegen nur die genaue Anzahl eines Merkmals angegeben werden soll, findet das Adjektiv "genau" vor dem jeweiligen Merkmal Verwendung.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste beispielhafte Ausführungsform des neuen Sägeblatts in einer Projektion in Bandlaufrichtung.
- **Fig. 2**: zeigt das Sägeblatt gemäß Fig. 1 in einer Seitenansicht.
- **Fig. 3**: zeigt das Sägeblatt gemäß Fig. 1 in einer Draufsicht.
- **Fig. 4**: zeigt die Leistungszähne einer zweiten beispielhaften Ausführungsform des neuen Sägeblatts in einer Projektion in Bandlaufrichtung.
- **Fig. 5**: zeigt die Leistungszähne einer dritten beispielhaften Ausführungsform des neuen Sägeblatts in einer Projektion in Bandlaufrichtung.
- **Fig. 6**: zeigt die Leistungszähne einer vierten beispielhaften Ausführungsform des neuen Sägeblatts in einer Projektion in Bandlaufrichtung.
- **Fig. 7**: zeigt die Leistungszähne einer fünften beispielhaften Ausführungsform des neuen Sägeblatts in einer Projektion in Bandlaufrichtung.
- **Fig. 8**: zeigt eine sechste beispielhafte Ausführungsform des neuen Sägeblatts in einer Projektion in Bandlaufrichtung.
- **Fig. 9**: zeigt eine siebte beispielhafte Ausführungsform des neuen Sägeblatts in einer Projektion in Bandlaufrichtung.
- **Fig. 10**: zeigt eine achte beispielhafte Ausführungsform des neuen Sägeblatts in einer Projektion in Bandlaufrichtung.
- **Fig. 11**: zeigt eine neunte beispielhafte Ausführungsform des neuen Sägeblatts in einer Projektion in Bandlaufrichtung.
- **Fig. 12**: zeigt das Sägeblatt gemäß Fig. 11 in einer Seitenansicht.
- **Fig. 13**: zeigt das Sägeblatt gemäß Fig. 11 in einer Draufsicht.

### FIGURENBESCHREIBUNG

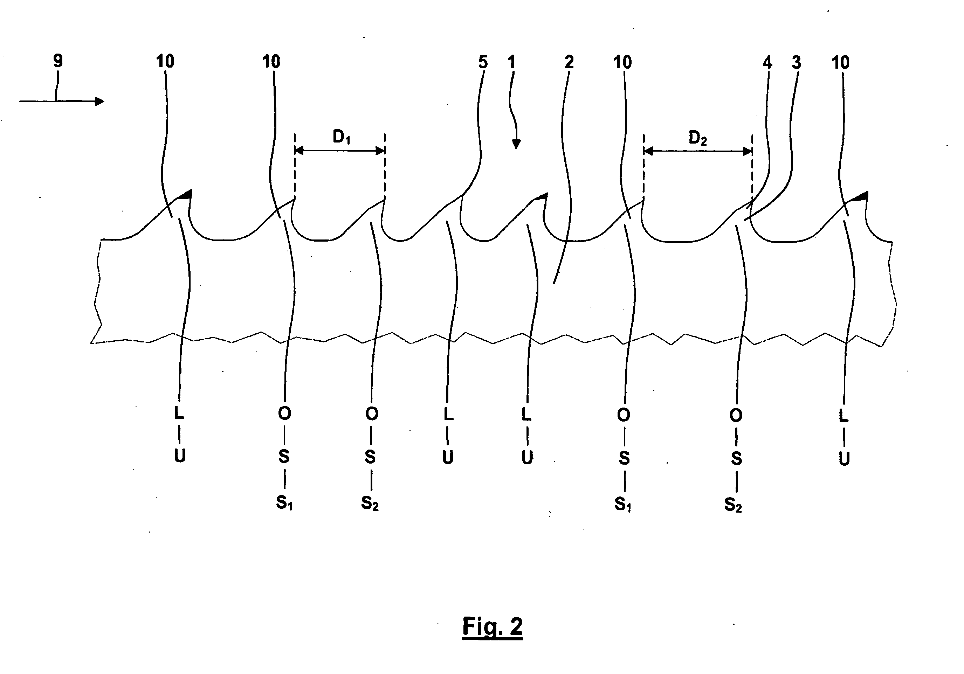

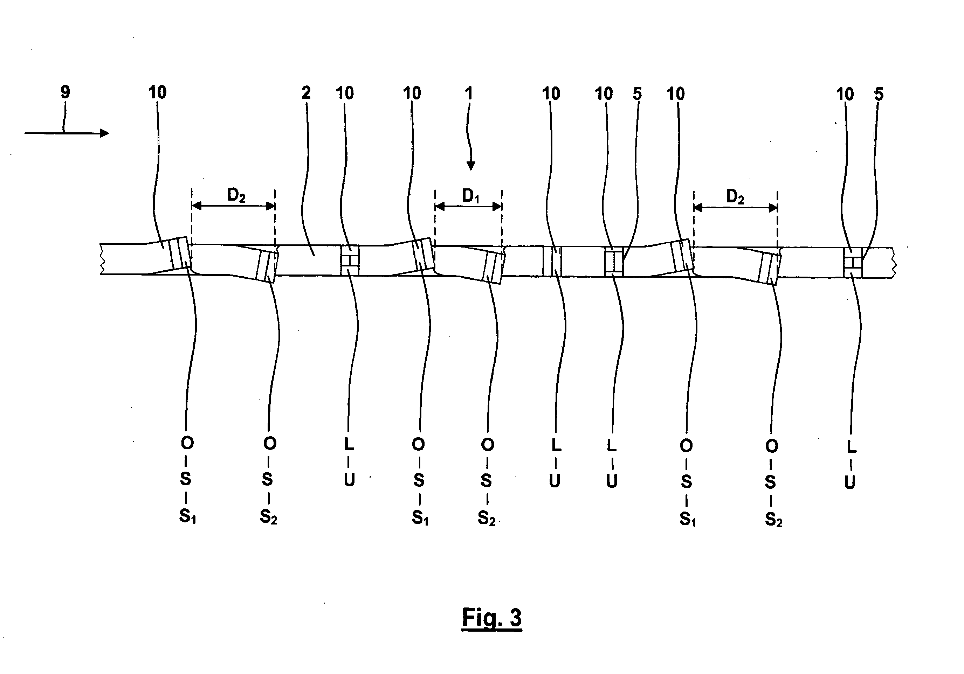

Die Fig. 1-3 zeigen verschiedene Ansichten einer ersten beispielhaften Ausführungsform des neuen Sägeblatts 1. Es versteht sich, dass die Figuren nur einen Ausschnitt aus dem Sägeblatt 1 zeigen, welches sich in der Darstellung der Fig. 2 und 3 sowohl nach links und rechts als auch in der Darstellung der Fig. 1 und 2 nach unten erstreckt. Die Darstellung der Fig. 1 ist dabei maßstabsgerecht. In den Figuren ist das Sägeblatt 1 als langgestrecktes Sägeband mit einer Bandlaufrichtung 9 ausgebildet. Bei dem Sägeblatt 1 könnte es sich jedoch auch um ein Kreissägeblatt oder ein weniger langgestrecktes Bügelsägeblatt handeln. Das Sägeblatt 1 selbst besteht aus Metall und dient zum Sägen von Metall.

Das Sägeblatt 1 weist einen Grundkörper 2 auf, von dem nur ein Ausschnitt sichtbar ist. Der Grundkörper 2 besitzt eine Mehrzahl von Vorsprüngen 3, an denen jeweils ein Einsatz 4 befestigt ist. Der Vorsprung 3 mit dem Einsatz 4 bildet einen Zahn 10 mit einer Schneide 5. Der Einsatz 4 besteht aus einem Material, das härter als das Material der Vorsprünge 3 und des Grundkörpers 2 des Sägeblatts ist. Vorzugsweise handelt es sich bei dem Material des Einsatzes 4 um Hartmetall. Die Einsätze 4 sind mit dem jeweiligen zugeordneten Vorsprung 3 - insbesondere durch Löten oder Schweißen - fest verbunden. Das Sägeblatt 1 könnte jedoch auch beispielsweise als Bimetallsägeblatt ausgebildet sein.

Ein Teil der Zähne 10 ist als sich entlang des Grundkörpers 2 wiederholende Oberflächenzähne O ausgebildet. Ein anderer Teil der Zähne 10 ist als sich entlang des Grundkörpers 2 wiederholende Gruppe mit drei ungeschränkten Leistungszähnen L ausgebildet. Es könnten aber auch mehr Leistungszähne L vorhanden sein. Wie in den Fig. 2 und 3 erkennbar ist, ist an einer ersten Stelle des Grundkörpers 2 zwischen den Oberflächenzähnen O eine erste Anzahl der Leistungszähne L der Gruppe angeordnet. Hierbei handelt es sich z. B. um den im linken Bereich der Fig. 2 und 3 als ersten Zahn 10 von links (Fig. 2) bzw. als dritten Zahn 10 von links (Fig. 3) angeordneten genau einen Leistungszahn L. Dieser Leistungszahn L ist also zwischen zwei Oberflächenzähnen O angeordnet. An einer zweiten Stelle des Grundkörpers 2 ist eine zweite Anzahl von Leistungszähnen L der Gruppe von Leistungszähnen L zwischen den Oberflächenzähnen O angeordnet. In den Beispielen der Fig. 2 und 3 sind dies die beiden unmittelbar nebeneinander angeordneten Leistungszähne L, die als vierter und fünfter Zahn 10 von links (Fig. 2) bzw. sechster und siebter Zahn 10 von links (Fig. 3) angeordnet sind. Es handelt sich dabei um genau zwei Leistungszähne L, die wiederum zwischen Oberflächenzähnen O angeordnet sind.

Im dargestellten Beispiel des Sägeblatts gemäß Fig. 1-3 handelt es sich bei den Oberflächenzähnen O um geschränkte Zähne S. Die Leistungszähne L sind als ungeschränkte Zähne U ausgebildet. Genauer gesagt handelt es sich bei den geschränkten Zähnen S um abwechselnd in unterschiedliche Richtungen geschränkte Zähne S₁ und S₂.

Zwischen den geschränkten Zähnen S₁, S₂ an einer ersten Stelle des Sägeblatts 1 ist ein erster Abstand D₁ vorhanden. An einer anderen Stelle des Sägeblatts 1 ist zwischen den geschränkten Zähnen S₁, S₂ ein zweiter Abstand D₂ vorhanden, wobei sich der erste Abstand D₁ und der zweite Abstand D₂ voneinander unterscheiden. Es könnten auch mehr unterschiedliche Abstände D vorhanden sein.

Wie insbesondere in Fig. 2 und 3 erkennbar ist, sind die Zähne 10 in dem Intervall L-O-O-L-L-0-0 bzw. L-S₁-S₂-L-L-S₁-S₂ bzw. L₁-S₁-S₂-L₂-L₃-S₁-S₂ angeordnet. In Fig. 2 beginnt das Intervall mit dem ersten Zahn 10 ganz links. Das zweite Intervall beginnt dann mit dem Zahn 10 ganz rechts. In Fig. 3 ist links ein Teil eines ersten Intervalls (O-O), dann beginnend mit dem dritten Zahn 10 von links ein vollständiges zweites Intervall und schließlich beginnend mit dem ganz rechten Zahn 10 noch ein Teil eines dritten Intervalls dargestellt. Die Abstände zwischen den Oberflächenzähnen O sind dabei unterschiedlich groß. Auch die Leistungszähne L sind in unterschiedlichen Teilungen angeordnet.

Während die Fig. 2 und 3 besonders gut die Zahnfolge mit den unterschiedlichen Anzahlen von Leistungszähnen L zwischen den Oberflächenzähnen O sowie die unterschiedlichen Abstände D₁, D₂ zwischen benachbarten Oberflächenzähnen O erkennen lassen, zeigt Fig. 1 besonders anschaulich die Ausbildung der Geometrie der Zähne 10 relativ zueinander. Im oberen Bereich von Fig. 1 ist durch die Schraffierung die besondere Aufteilung der wirksamen Schneidenabschnitte auf die Zähne 10 dargestellt, die so jeweils einem bestimmten streifenförmigen Teil des Schnittkanals zugeordnet sind und nur dort Späne beim Sägen abnehmen.

Die Leistungszähne L weisen unterschiedliche Höhen und in diesem Fall gleiche Breiten auf, wobei der Leistungszahn L mit der größten Höhe einen Schnittkantenabschnitt 6 mit der geringsten Breite aufweist. Zu beiden Seiten des Schnittkantenabschnitts 6 schließen sich symmetrisch zur Längssymmetrieachse 7 Fasen 8 an. Dieser Leistungszahn L wird üblicherweise auch als Führungszahn bezeichnet und räumt Späne im Bereich der Längsmittelachse 7 aus. Der zweithöchste Leistungszahn L weist eine entsprechend reduzierte Höhe und einen verbreiterten Schnittkantenabschnitt 6 auf. An diesen schließen sich wiederum Fasen 8 an. Dieser räumt Späne zu beiden Seiten des Führungszahns aus dem Schnittkanal aus. Der niedrigste Leistungszahn L ist im vorliegenden Fall ungefast ausgebildet, so dass sich seine Schneide 5 über die gesamte Breite erstreckt. Auch dieser Leistungszahn L räumt einen streifenförmigen Teil aus dem Schnittkanal aus.

Die Leistungszähne L sind zwischen mehreren Paaren von Oberflächenzähnen O angeordnet, von denen aufgrund der überlappenden Anordnung in Richtung der Zeichnungsebene der Fig. 1 nur ein Paar erkennbar ist. Im vorliegenden Fall sind die Oberflächenzähne O als geschränkte Zähne S₁, S₂ und als ungefaste Zähne U ausgebildet. Sie könnten jedoch auch gefast sein.

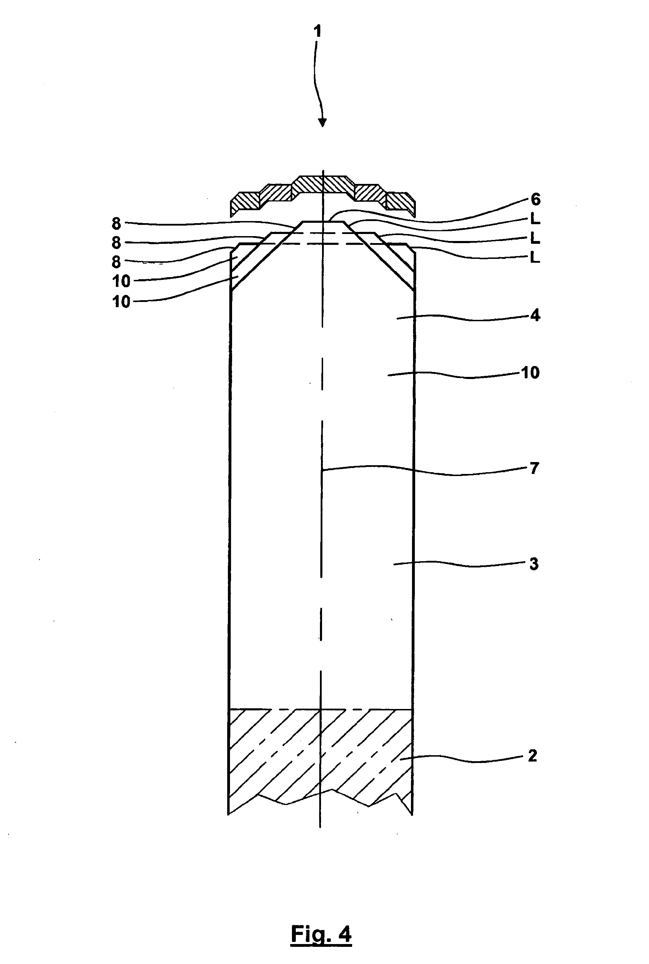

Die **Fig. 4-7** zeigen weitere vergleichbare Darstellungen anderer beispielhafter Ausführungsformen des neuen Sägeblatts 1, wobei aus Gründen der Übersichtlichkeit nur die Leistungszähne L dargestellt sind. Die auch bei diesen Ausführungsformen vorhandenen Oberflächenzähne O können so ausgebildet und angeordnet sein, wie dies in den Fig. 1-3 der Fall ist. Auch sind Kombinationen mit den erst später folgenden Ausführungsformen möglich. Aus Gründen der Übersichtlichkeit ist nur ein Teil der Bezugszeichen in diese Figuren eingezeichnet.

Wie in **Fig. 4** insbesondere erkennbar ist, weisen dort sämtliche Leistungszähne L Fasen 8 auf. Die Höhen der Leistungszähne L sowie die Ausbildung der Schnittkantenabschnitte 6 und der Fasen 8 ist dabei so gewählt, dass die Schnittarbeit gleichmäßig auf die Leistungszähne L verteilt wird.

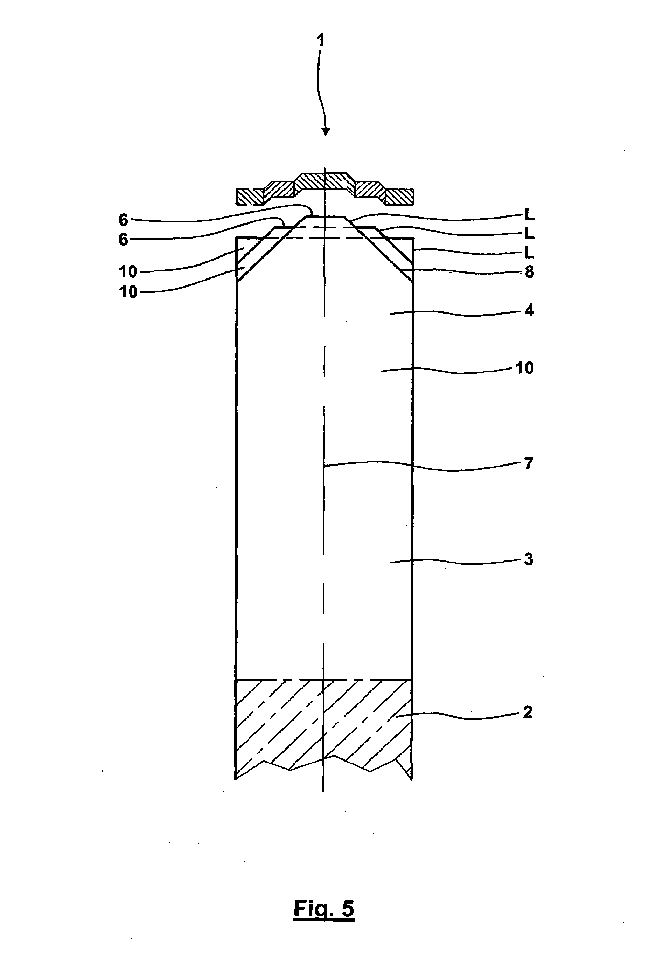

**Fig. 5** zeigt eine Ausführungsform, bei der der niedrigste der Leistungszähne L ungefast ausgebildet ist.

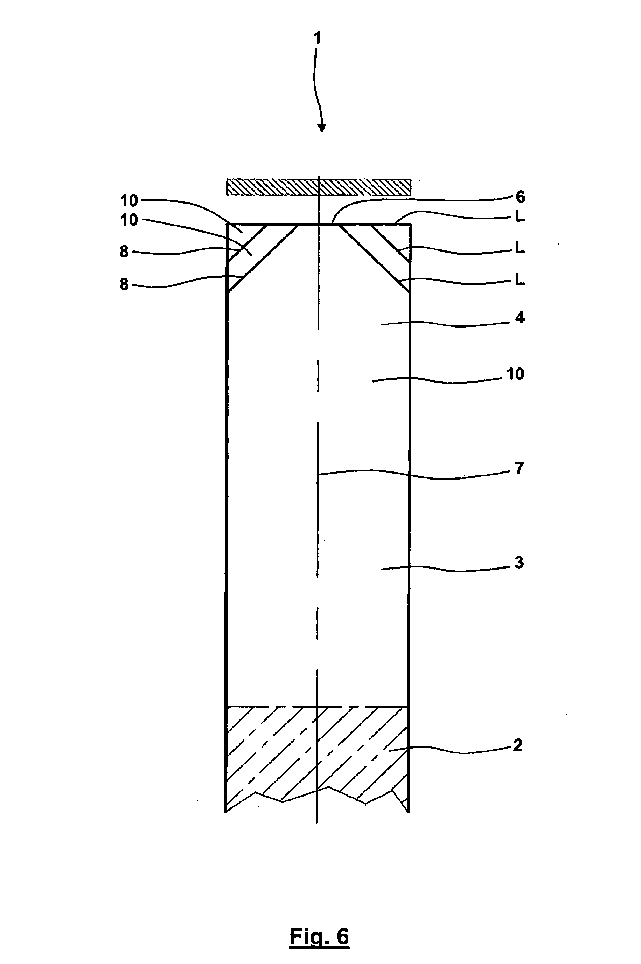

**Fig. 6** zeigt eine Ausführungsform, bei der sämtliche Leistungszähne L dieselbe Höhe besitzen. Zwei der Leistungszähne L weisen dabei Fasen 8 auf, während der dritte Leistungszahn L keine Fase 8 besitzt.

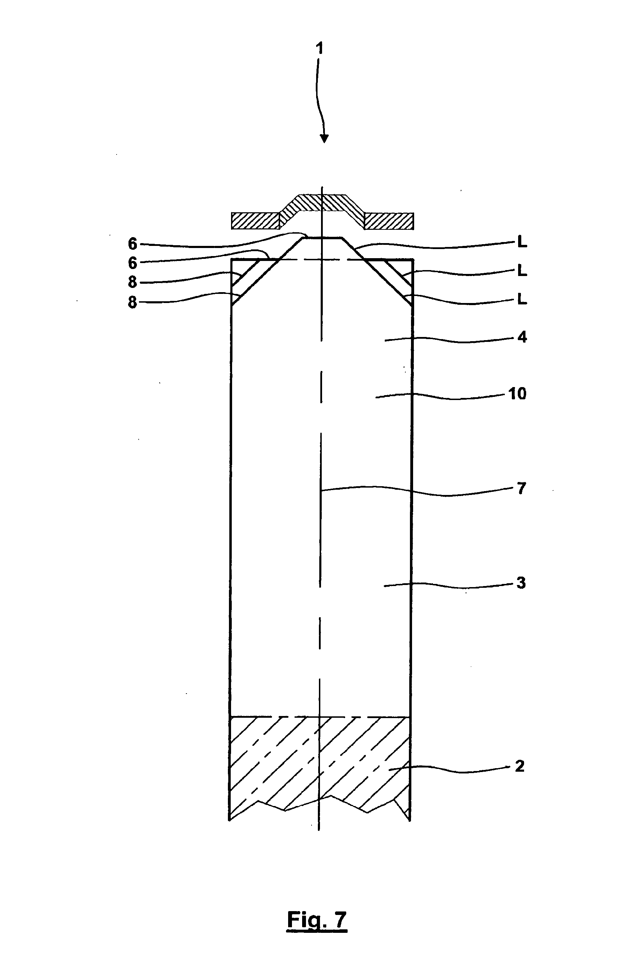

**Fig. 7** zeigt eine weitere beispielhafte Ausführungsform des Sägeblatts 1, bei der der Führungszahn die größte Höhe besitzt, während die beiden anderen Leistungszähne L eine übereinstimmende geringere Höhe besitzen. Der Führungszahn weist eine Fase 8 auf. Einer der beiden anderen Leistungszähne L weist ebenfalls eine solche Fase 8 auf, während der andere ungefast ausgebildet ist.

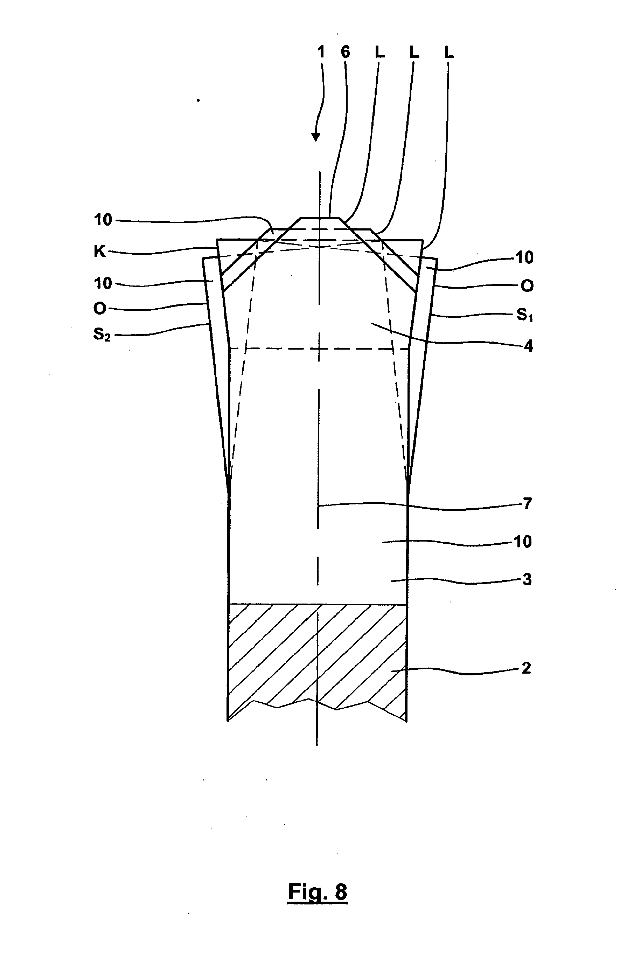

**Fig. 8** zeigt eine weitere beispielhafte Ausführungsform des Sägeblatts 1, wobei hier wiederum wie bei Fig. 1 neben den Leistungszähnen L auch die Oberflächenzähne O dargestellt sind. Die Oberflächenzähne O sind hier als geschränkte Zähne S₁, S₂ ausgebildet. Im Gegensatz zu den vorangehend beschriebenen beispielhaften Ausführungsformen ist hier einer der Leistungszähne L - in diesem Fall der niedrigste Leistungszahn L - als konischer Zahn K ausgebildet. Dies bedeutet, dass er in der Darstellung der Fig. 8 eine sich nach unten verjüngende Form besitzt und somit ein Freiwinkel zu einer vertikalen Achse vorhanden ist. In diesem Fall ist der konische Zahn K ungefast ausgebildet. Er könnte jedoch ebenfalls eine Fase 8 aufweisen.

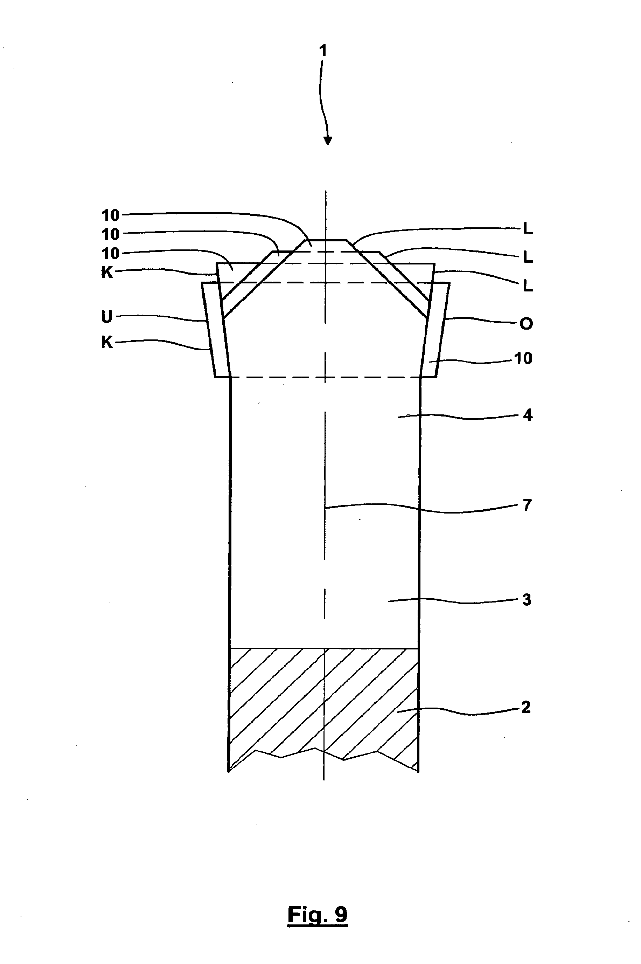

**Fig. 9** zeigt ein weiteres Ausführungsbeispiel des Sägeblatts 1, bei dem wiederum der niedrigste der Leistungszähne L als konischer Zahn K ausgebildet ist. Der Oberflächenzahn O ist als ungeschränkter Zahn U und ebenfalls als konischer Zahn K ausgebildet. Er ist der Zahn 10 mit der größten Breite, so dass er seine die Oberfläche des gesägten Werkstücks bearbeitende Funktion übernehmen kann.

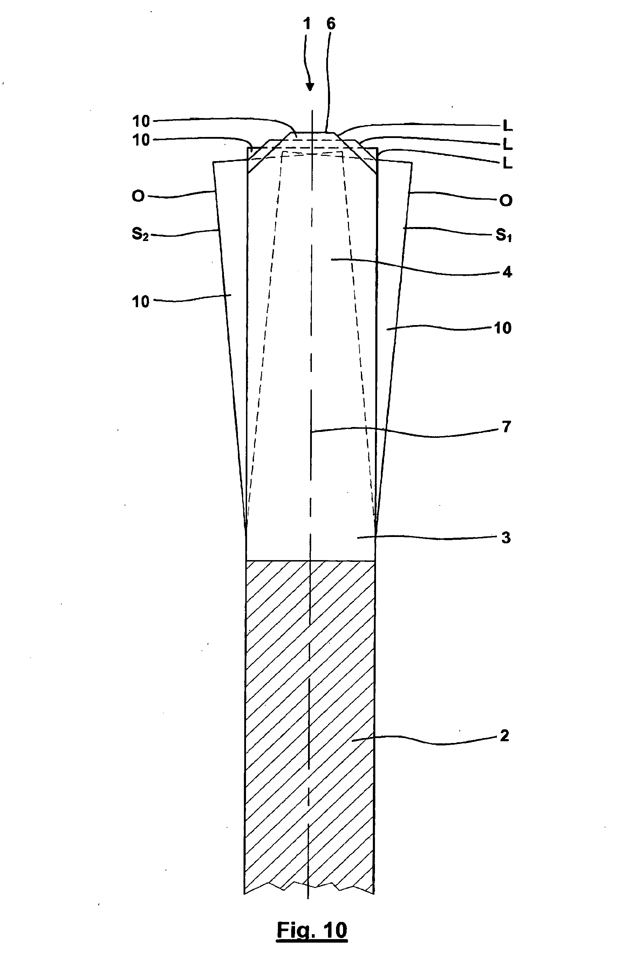

**Fig. 10** zeigt ein weiteres Ausführungsbeispiel des neuen Sägeblatts 1. In diesem Fall handelt es sich bei den Leistungszähnen L wieder um nicht konische Leistungszähne L mit unterschiedlichen Höhen, von denen die beiden höheren jeweils Fasen 8 aufweisen, während der niedrigste Leistungszahn L keine Fase besitzt. Die Oberflächenzähne O sind als in unterschiedliche Richtungen geschränkte Zähne S₁, S₂ ausgebildet.

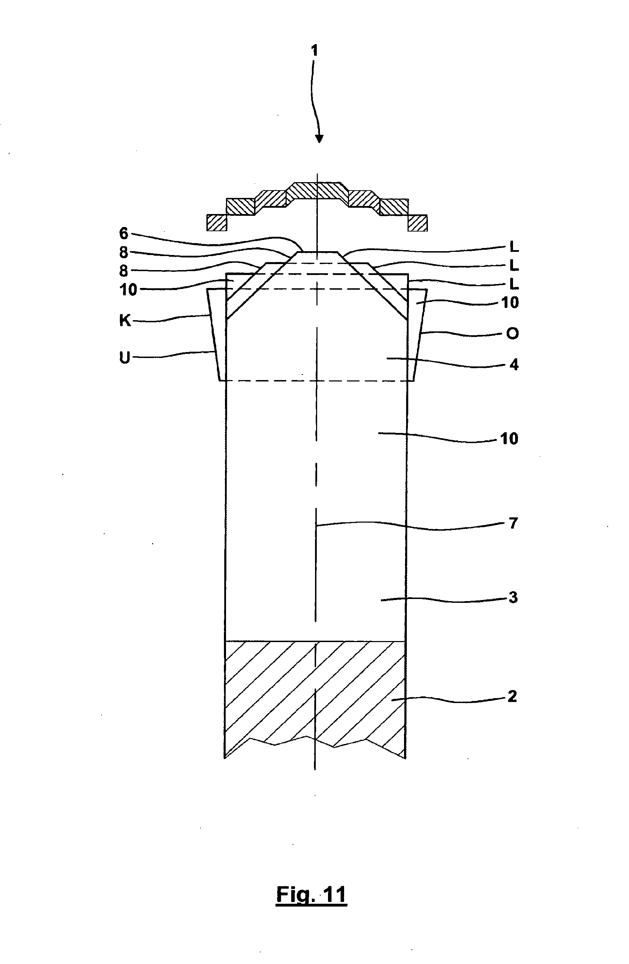

Die **Fig. 11-13** zeigen unterschiedliche Ansichten einer weitere beispielhafte Ausführungsform des neuen Sägeblatts 1. Bei dieser sind die Leistungszähne L als nicht konische Zähne 10 und ungeschränkte Zähne U ausgebildet, wobei die beiden höheren Leistungszähne L jeweils Fasen 8 aufweisen, während der niedrigste Leistungszahn L ungefast ausgebildet ist. Bei dem Oberflächenzahn O handelt es sich um einen ungeschränkten Zahn U, der wiederum gleichzeitig ein konischer Zahn K ist.

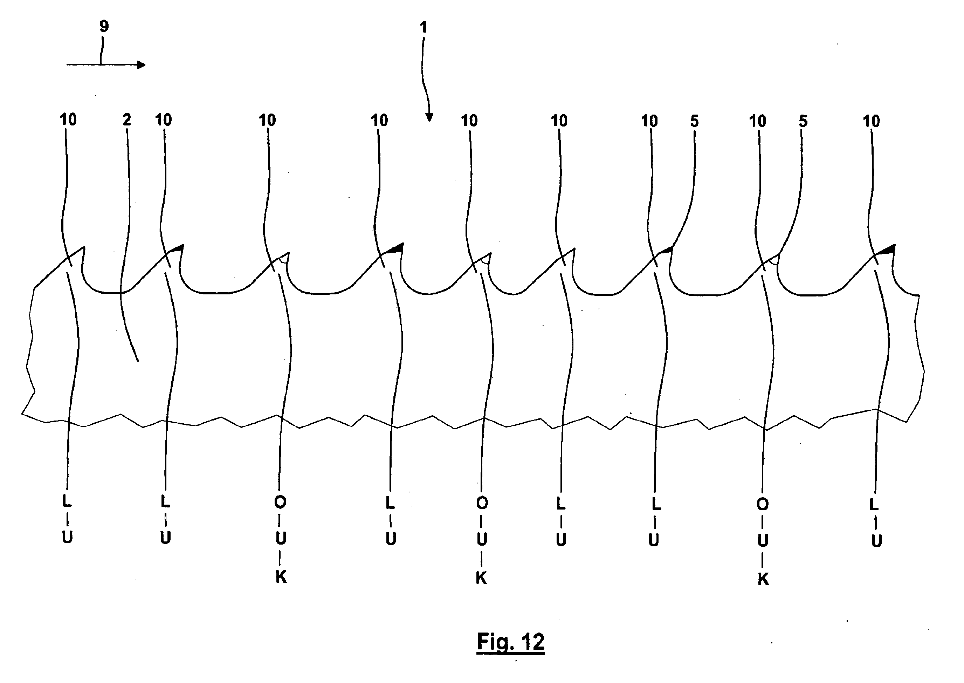

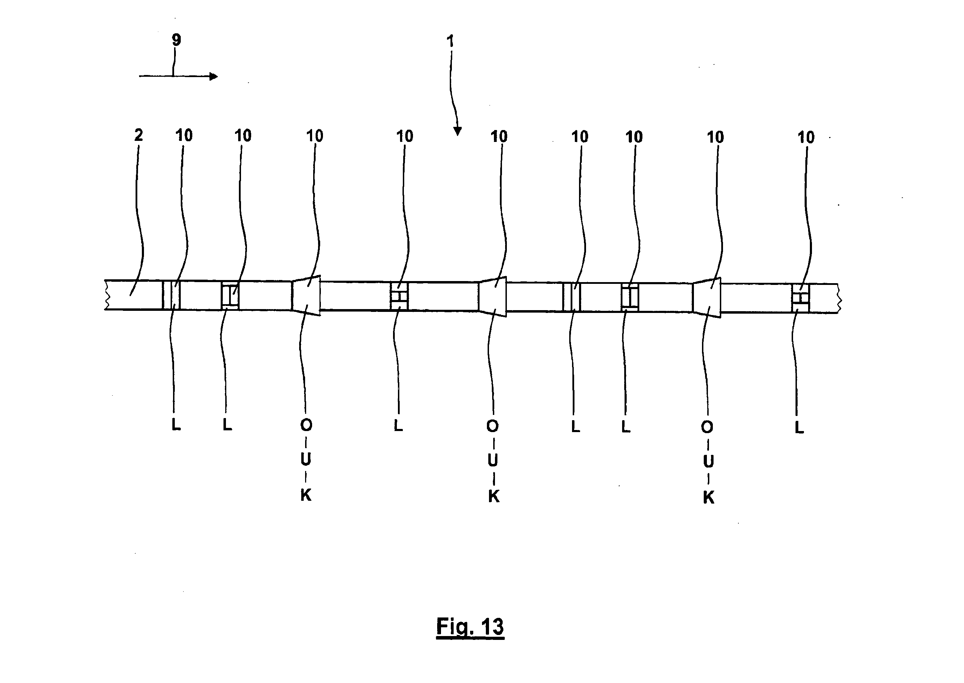

Wie insbesondere in Fig. 12 und 13 erkennbar ist, sind die Zähne 10 in dem Intervall L-O-L-L-O angeordnet. Dabei ist links ein Teil eines ersten Intervalls (L-L-O), dann beginnend mit dem vierten Zahn 10 von links ein vollständiges zweites Intervall und schließlich beginnend mit dem ganz rechten Zahn 10 noch ein Teil eines dritten Intervalls dargestellt. Die Abstände zwischen den Oberflächenzähnen O sind dabei unterschiedlich groß. Auch die Leistungszähne L sind in unterschiedlichen Teilungen angeordnet.

Die Zähne 10 können aber auch z. B. in einem sich wiederholenden Intervall von sieben Zähnen 10 angeordnet sein. Die Zähne 10 sind dabei in unterschiedlichen Teilungen t₁ bis t₇ angeordnet, wobei unter t₁ der Abstand zwischen dem ersten Zahn 10 und dem zweiten Zahn 10 des Intervalls, unter t₂ der Abstand zwischen dem zweiten Zahn 10 und dem dritten Zahn 10 des Intervalls usw. und schließlich unter t₇ der Abstand zwischen dem siebten Zahn 10 und dem nachfolgenden ersten Zahn 10 des nächsten Intervalls verstanden wird.

Bei einer Anordnung der Zähne 10 in der Abfolge L-O₁-O₂-L-L-O₁-O₂, L₁-O₁-O₂-L₂-L₃-O₁-O₂ und insbesondere Lₗ-S₁-S₂-L₂-L₃-S₁-S₂ ist dabei die Summe der Teilungen t₂, t₃, t₄ und t₅ gleich der Summe der Teilungen t₁, t₆, und t₇. Gleichzeitig ist dieser Betrag gleich der Summe der Teilungen t₁, t₂ und t₇. Bei t₂ und t₆ handelt es sich dabei um die Abstände zwischen den geschränkten Zähnen S. Bei einer konkreten beispielhaften Ausführungsform des Sägeblatts 1 ist dabei die Teilung t₂ = D₁ = 14,65 mm und die Teilung t₆ = D₂ = 17,6 mm.

### BEZUGSZEICHENLISTE

- 1: Sägeblatt
- 2: Grundkörper
- 3: Vorsprung
- 4: Einsatz
- 5: Schneide
- 6: Schnittkantenabschnitt
- 7: Längsmittelachse
- 8: Fase
- 9: Bandlaufrichtung
- 10: Zahn

- O: Oberflächenzahn
- L: Leistungszahn
- S: geschränkter Zahn
- S₁: in eine erste Richtung geschränkter Zahn
- S₂: in eine zweite Richtung geschränkter Zahn
- U: ungeschränkter Zahn
- K: konischer Zahn
- D₁: Abstand 1
- D₂: Abstand 2
- t: Teilung

## Patentansprüche

1. Sägeblatt (1), mit
einem Grundkörper (2), und
einer Mehrzahl von an den Grundkörper (2) anschließenden Zähnen (10), wobei
ein Teil der Zähne (10) als sich entlang des Grundkörpers (2) wiederholende Oberflächenzähne (O) ausgebildet ist, wobei ein Oberflächenzahn (O) ein Zahn (10) des Sägeblatts (1) ist, der für die Ausbildung der Oberflächengüte des gesägten Werkstücks verantwortlich ist und in einer Projektion des Sägeblatts (1) in Bandlaufrichtung eine äußere seitliche Begrenzung definiert, und
ein Teil der Zähne (10) als sich entlang des Grundkörpers (2) wiederholende Gruppe mit drei ungeschränkten Leistungszähnen (L) ausgebildet ist, wobei ein Leistungszahn (L) ein Zahn (10) ist, der im Gegensatz zu den Oberflächenzähnen (O) im Wesentlichen für die Schnittleistung des Sägeblatts (1) verantwortlich ist und zumindest zu bestimmten Teilen in der Vorschubrichtung des Sägeblatts (1) gegenüber anderen Zähnen (10) hervorragt, **dadurch gekennzeichnet, dass**
eine erste Anzahl der Leistungszähne (L) der Gruppe an einer ersten Stelle des Grundkörpers (2) zwischen den Oberflächenzähnen (O) und eine zweite Anzahl der Leistungszähne (L) der Gruppe an einer zweiten Stelle des Grundkörpers (2) zwischen den Oberflächenzähnen (O) angeordnet ist, wobei sich die erste Anzahl und die zweite Anzahl unterscheiden und ungleich null sind, wobei die Oberflächenzähne (O) und die Leistungszähne (L) in einer der sich wiederholenden folgenden Abfolgen angeordnet sind:
L-O-L-L-O,
L-O-L-L-O-O,
L-O-O-L-L-O,
L-O-O-L-L-O-O,
L-L-O-L-L-L-O,
L-L-O-L-L-L-O-O,
L-L-O-O-L-L-L-O,
wobei auch eine ungerade Mehrzahl oder eine größere gerade Mehrzahl von Oberflächenzähnen (O) nebeneinander angeordnet sein kann.

2. Sägeblatt (1) nach Anspruch 1, **dadurch gekennzeichnet, dass** die Oberflächenzähne (O) als geschränkte Zähne (S) ausgebildet sind.

3. Sägeblatt (1) nach Anspruch 2, **dadurch gekennzeichnet, dass** die Oberflächenzähne (O) als sich entlang des Grundkörpers (2) wiederholende Gruppe mit jeweils einem in eine erste Richtung geschränkten Zahn (S₁) und einem in eine andere zweite Richtung geschränkten Zahn (S₂) ausgebildet sind.

4. Sägeblatt (1) nach Anspruch 3, **dadurch gekennzeichnet, dass**
ein erster Teil der Oberflächenzähne (O) als sich entlang des Grundkörpers (2) wiederholende erste Gruppe mit jeweils einem in eine erste Richtung geschränkten Zahn (S₁) und einem in eine andere zweite Richtung geschränkten Zahn (S₂) ausgebildet sind und zwischen den geschränkten Zähnen (S₁, S₂) ein erster Abstand (D₁) vorhanden ist, und
ein zweiter Teil der Oberflächenzähne (O) als sich entlang des Grundkörpers (2) wiederholende zweite Gruppe mit jeweils einem in die erste Richtung geschränkten Zahn (S₁) und einem in die zweite Richtung geschränkten Zahn (S₂) ausgebildet sind und zwischen den geschränkten Zähnen (S₁, S₂) ein zweiter Abstand (D₂) vorhanden ist, wobei sich der erste Abstand (D₁) und der zweite Abstand (D₂) unterscheiden.

5. Sägeblatt (1) nach Anspruch 1, **dadurch gekennzeichnet, dass** die Oberflächenzähne (O) als ungeschränkte Zähne (U) und als die Zähne (10) mit der größten Breite ausgebildet sind.

6. Sägeblatt (1) nach Anspruch 5, **dadurch gekennzeichnet, dass** die Oberflächenzähne (O) als konische Zähne (K) ausgebildet sind.

7. Sägeblatt (1) nach Anspruch 5 oder 6, **dadurch gekennzeichnet, dass** die Oberflächenzähne (O) als die Zähne (10) mit der geringsten Höhe ausgebildet sind.

8. Sägeblatt (1) nach mindestens einem der vorhergehenden Ansprüche, **dadurch gekennzeichnet, dass** die Leistungszähne (L) als die Zähne (10) mit der größten Höhe ausgebildet sind.

9. Sägeblatt (1) nach mindestens einem der vorhergehenden Ansprüche, **dadurch gekennzeichnet, dass** die Leistungszähne (L) unterschiedliche Höhen und gleiche Breiten aufweisen, wobei der Leistungszahn (L) mit der größten Höhe einen Schnittkantenabschnitt (5) mit der geringste Breite und der Leistungszahn (L) mit der geringsten Höhe einen Schnittkantenabschnitt (5) mit der größten Breite der Leistungszähne (L) besitzt.

10. Sägeblatt (1) nach Anspruch 9, **dadurch gekennzeichnet, dass** der Leistungszahn (L) mit der größten Höhe gefast und der Leistungszahn (L) mit der geringsten Höhe ungefast ausgebildet ist.

11. Sägeblatt (1) nach mindestens einem der vorhergehenden Ansprüche, **dadurch gekennzeichnet, dass** die erste Anzahl genau eins und zweite Anzahl genau zwei ist.

12. Sägeblatt (1) nach mindestens einem der vorhergehenden Ansprüche, **dadurch gekennzeichnet, dass** die Zähne (10) unterschiedliche Höhen besitzen und die geringere Höhe der niedrigeren Zähne (10) durch Umformen, insbesondere Stauchen, erzeugt ist.

13. Sägeblatt (1) nach mindestens einem der vorhergehenden Ansprüche, **dadurch gekennzeichnet, dass**
ein erster Teil der Oberflächenzähne (O) als sich entlang des Grundkörpers (2) wiederholende erste Gruppe mit jeweils einem in eine erste Richtung geschränkten Zahn (S₁) und einem in eine andere zweite Richtung geschränkten Zahn (S₂) ausgebildet sind, und
die die Oberflächenzähne (O, S₁, S₂) und die Leistungszähne (L) in einer der sich wiederholenden folgenden Abfolgen angeordnet sind:
L-S₁-S₂-L-L-S₁-S₂,
L-S₁-S₂-L-L-S₁-S₂-S₁-S₂,
L-S₁-S₂-S₁-S₂-L-L-S₁-S₂-S₁-S₂,
L-S₁-S₂-S₁-S₂-L-L-S₁-S₂,
L-L-S₁-S₂-L-L-L-S₁-S₂,
L-L-S₁-S₂-L-L-L-S₁-S₂-S₁-S₂,
L-L-S₁-S₂-S₁-S₂-L-L-L-S₁-S₂.

14. Sägeblatt (1) nach mindestens einem der vorhergehenden Ansprüche, **dadurch gekennzeichnet, dass** das Sägeblatt (1) ein Sägeband zum Sägen von Metall ist, welches insbesondere Hartmetalleinsätze (4) besitzt oder aus Bimetall besteht.

## Claims

1. A saw blade (1), comprising
a base body (2), and
a plurality of teeth (10) being connected to the base body (2),
a part of the teeth (10) being designed as surface teeth (O) being repeated along the base body (2), a surface tooth (O) being a tooth (10) of the saw blade (1) which is responsible for the surface quality of the cut workpiece and which defines an outer lateral limit in a projection of the saw blade (1) in its direction of movement, and
a part of the teeth (10) being designed as a group including three unset performance teeth (L) being repeated along the base body (2), a performance tooth (L) being a tooth (10) which, in contrast to the surface teeth (O), is substantially responsible for the cutting performance of the saw blade (1) and which, at least with specific parts, protrudes in the feed direction of the saw blade (1) compared to the other teeth (10),
**characterised in that**
a first number of the performance teeth (L) of the group is arranged at a first location of the base body (2) between the surface teeth (O) and a second number of the performance teeth (L) of the group is located at a second location of the base body (2) between the surface teeth (O), the first number and the second number being different and being unequal to zero, the surface teeth (O) and the performance teeth (L) being arranged in one of the following repeated orders:
L-O-L-L-O,
L-O-L-L-O-O,
L-O-O-L-L-O,
L-O-O-L-L-O-O,
L-L-O-L-L-L-O,
L-L-O-L-L-L-O-O,
L-L-O-O-L-L-L-O,
wherein it is also possible that an uneven plurality or a greater even plurality of surface teeth (O) is arranged side by side.

2. The saw blade (1) of claim 1, **characterised in that** the surface teeth (O) are designed as unset teeth (S).

3. The saw blade (1) of claim 2, **characterised in that** the surface teeth (O) are designed as a group being repeated along the base body (2), each group including a tooth (S₁) being set in a first direction and a tooth (S₂) being set in a different second direction.

4. The saw blade (1) of claim 3, **characterised in that**
a first part of the surface teeth (O) is designed as a first group being repeated along the base body (2), the first group including a tooth (S₁) being set in a first direction and a tooth (S₂) being set in a different second direction, a first distance (D₁) existing between the set teeth (S₁, S₂), and
a second part of the surface teeth (O) is designed as a second group being repeated along the base body (2), the second group including a tooth (S₁) being set in the first direction and a tooth (S₂) being set in the second direction, a second distance (D₂) existing between the set teeth (S₁, S₂), the first distance (D₁) and the second distance (D₂) being different.

5. The saw blade (1) of claim 1, **characterised in that** the surface teeth (O) are designed as unset teeth (U) and as the teeth (10) having the greatest width.

6. The saw blade (1) of claim 5, **characterised in that** the surface teeth (O) are designed as conical teeth (K).

7. The saw blade (1) of claim 5 or 6, **characterised in that** the surface teeth (O) are designed as the teeth (10) having the smallest height.

8. The saw blade (1) of at least one of the preceding claims, **characterised in that** the performance teeth (L) are designed as the teeth (10) having the greatest height.

9. The saw blade (1) of at least one of the preceding claims, **characterised in that** the performance teeth (L) have different heights and the same widths, the performance tooth (L) with the greatest height having a cutting edge portion (5) having the smallest width and the performance tooth (L) with the smallest height having a cutting edge portion (5) having the greatest width of the performance teeth (L).

10. The saw blade (1) of claim 9, **characterised in that** the performance tooth (L) having the greatest height is chamfered and the performance tooth (L) having the smallest height is not chamfered.

11. The saw blade (1) of at least one of the preceding claims, **characterised in that** the first number is exactly one and the second number is exactly two.

12. The saw blade (1) of at least one of the preceding claims, **characterised in that** the teeth (10) have different heights and the smaller height of the lower teeth (10) is produced by deforming, especially upsetting.

13. The saw blade (1) of at least one of the preceding claims, **characterised in that**
a first part of the surface teeth (O) is designed as a first group being repeated along the base body (2), the first group including a tooth (S₁) being set in a first direction and a tooth (S₂) being set in a different second direction, and
the surface teeth (O, S₁, S₂) and the performance teeth (L) is arranged in one of the following repeated orders:
L-S₁-S₂-L-L-S₁-S₂,
L-S₁-S₂-L-L-S₁-S₂-S₁-S₂,
L-S₁-S₂-S₁-S₂-L-L-S₁-S₂-S₁-S₂,
L-S₁-S₂-S₁-S₂-L-L-S₁-S₂,
L-L-S₁-S₂-L-L-L-S₁-S₂,
L-L-S₁-S₂-L-L-L-S₁-S₂-S₁-S₂,
L-L-S₁-S₂-S₁-S₂-L-L-L-S₁-S₂.

14. The saw blade (1) of at least one of the preceding claims, **characterised in that** the saw blade (1) is a saw band for sawing metal, the saw band including carbide inserts (4) or being made of bimetal.

## Revendications

1. Lame de scie (1), comportant
un corps de base (2), et
une pluralité de dents (10) attachées au corps de base (2),
une partie des dents (10) étant réalisées sous forme de dents de surface (O) répétitives le long du corps de base (2), une dent de surface (O) étant une dent (10) de la lame de scie (1) qui est responsable de la réalisation de la qualité de surface de la pièce sciée et qui définit une délimitation latérale extérieure dans une projection de la lame de scie (1) dans le sens de déplacement de la lame, et
une partie des dents (10) étant réalisées sous la forme d'un groupe de trois dents de puissance (L) non avoyées répétitif le long du corps de base (2), une dent de puissance (L) étant une dent (10) qui, contrairement aux dents de surface (O), est sensiblement responsable de la puissance de coupe de la lame de scie (1) et qui est en saillie par rapport à d'autres dents (10) au moins dans des parties déterminées dans le sens d'avancement de la lame de scie (1), **caractérisée en ce que**
un premier nombre de dents de puissance (L) du groupe est disposé à un premier emplacement du corps de base (2) entre les dents de surface (O) et un deuxième nombre de dents de puissance (L) du groupe est disposé à un deuxième emplacement du corps de base (2) entre les dents de surface (O), le premier nombre et le deuxième nombre étant différents et étant différents de zéro, les dents de surface (O) et les dents de puissance (L) étant disposées selon les séquences suivantes répétitives:
L-O-L-L-O,
L-O-L-L-O-O,
L-O-O-L-L-O,
L-O-O-L-L-O-O,
L-L-O-L-L-L-O,
L-L-O-L-L-L-O-O,
L-L-O-O-L-L-L-O,
un nombre impair ou un nombre pair plus élevé de dents de surface (O) pouvant aussi être disposés les uns à côté des autres.

2. Lame de scie (1) selon la revendication 1, **caractérisée en ce que** les dents de surface (O) sont réalisées sous forme de dents avoyées (S).

3. Lame de scie (1) selon la revendication 2, **caractérisée en ce que** les dents de surface (O) sont réalisées sous la forme d'un groupe répétitif le long du corps de base (2), comportant chacun une dent (S₁) avoyée dans une première direction et une dent (S₂) avoyée dans une deuxième direction différente.

4. Lame de scie (1) selon la revendication 3, **caractérisée en ce que**
une première partie de dents de surface (O) sont réalisées sous la forme d'un premier groupe, répétitif le long du corps de base (2), comportant chacun une dent (S₁) avoyée dans une première direction et une dent (S₂) avoyée dans une deuxième direction différente, et une première distance (D₁) est disponible entre les dents (S₁, S₂) avoyées, et
une deuxième partie de dents de surface (O) sont réalisées sous la forme d'un deuxième groupe, répétitif le long du corps de base (2), comportant chacun une dent (S₁) avoyée dans la première direction et une dent (S₂) avoyée dans la deuxième direction, et une deuxième distance (D₂) est disponible entre les dents (S₁, S₂) avoyées, la première distance (D₁) et la deuxième distance (D₂) étant différentes l'une de l'autre.

5. Lame de scie (1) selon la revendication 1, **caractérisée en ce que** les dents de surface (O) sont réalisées sous forme de dents non avoyées (U) et sous forme de dents (10) avec la plus grande largeur.

6. Lame de scie (1) selon la revendication 5, **caractérisée en ce que** les dents de surface (O) sont réalisées sous forme de dents coniques (K).

7. Lame de scie (1) selon la revendication 5 ou 6, **caractérisée en ce que** les dents de surface (O) sont réalisées sous forme de dents (10) avec la plus faible hauteur.

8. Lame de scie (1) selon au moins l'une des revendications précédentes, **caractérisée en ce que** les dents de puissance (L) sont réalisées sous forme de dents (10) avec la plus grande hauteur.

9. Lame de scie (1) selon au moins l'une des revendications précédentes, **caractérisée en ce que** les dents de puissance (L) ont des hauteurs différentes et des largeurs identiques, la dent de puissance (L) avec la plus grande hauteur ayant un tronçon d'arête de coupe (5) avec la plus faible largeur et la dent de puissance (L) avec la plus faible hauteur ayant un tronçon d'arête de coupe (5) avec la plus grande largeur des dents de puissance (L).

10. Lame de scie (1) selon la revendication 9, **caractérisée en ce que** la dent de puissance (L) avec la plus grande hauteur est biseautée et la dent de puissance (L) avec la plus petite hauteur n'est pas biseautée.

11. Lame de scie (1) selon au moins l'une des revendications précédentes, **caractérisée en ce que** le premier nombre est exactement un et le deuxième nombre est exactement deux.

12. Lame de scie (1) selon au moins l'une des revendications précédentes, **caractérisée en ce que** les dents (10) ont des hauteurs différentes et la plus faible hauteur des dents (10) les plus basses est obtenue par formage, en particulier par aplatissement.

13. Lame de scie (1) selon au moins l'une des revendications précédentes, **caractérisée en ce que**
une première partie des dents de surface (O) sont réalisées sous la forme d'un premier groupe, répétitif le long du corps de base (2), comportant chacun une dent (S₁) avoyée dans une première direction et une dent (S₂) avoyée dans une deuxième direction différente, et
les dents de surface (O, S₁, S₂) et les dents de puissance (L) sont disposées selon les séquences suivantes répétitives:
L-S₁-S₂-L-L-S₁-S₂,
L-S₁-S₂-L-L-S₁-S₂-S₁-S₂,
L-S₁-S₂-S₁-S₂-L-L-S₁-S₂-S₁-S₂,
L-S₁-S₂-S₁-S₂-L-L-S₁-S₂,
L-L-S₁-S₂-L-L-L-S₁-S₂,
L-L-S₁-S₂-L-L-L-S₁-S₂-S₁-S₂,
L-L-S₁-S₂-S₁-S₂-L-L-L-S₁-S₂.

14. Lame de scie (1) selon au moins l'une des revendications précédentes, **caractérisée en ce que** la lame de scie (1) est une lame de scie pour scier le métal, laquelle possède en particulier des inserts en carbure (4) ou est réalisée dans un bimétal.
